# EUROPEAN PATENT SPECIFICATION

(11) **EP 1 843 077 B1**
(45) Date of publication and mention of the grant of the patent: **16.11.2011**
(21) Application number: 07104016.6
(22) Date of filing: 13.03.2007
(51) Int. Cl.: F16M 11/04

(54) **Support arrangement for monitors and similar equipment**
Trägeranordnung für Bildschirme und ähnliche Geräte
Agencement de support pour moniteurs et équipement similaire

(30) Priority: 03.04.2006 IT PN20060013 U
(43) Date of publication of application: 10.10.2007
(73) Proprietor: Electrolux Home Products Corporation N.V., 1130 Brussel (BE)
(72) Inventor: Esteve, Katarina, 33080 Porcia (Pordenone) (IT)
(74) Representative: Baumgartl, Gerhard Willi

(56) References cited:
- EP-A- 0 723 368
- EP-A1- 0 047 103
- WO-A1-99/44472
- DE-U1-202005 009 471
- FR-A- 2 682 724
- US-A- 4 516 751
- US-A1- 2003 154 673
- US-A1- 2004 251 389
- US-B1- 6 364 261

## Description

The present invention refers to a support arrangement for monitors and similar pieces of equipment.

Currently available support arrangement of the considered kind are known to generally comprise fastening means adapted to receive and accommodate a TV-set, a monitor or any other similar piece of equipment, as the case may be, as well as an articulated arm allowing the monitor, or any such similar piece of equipment, as the case may be, to be arranged in a variety of different positions. Such an arrangement is disclosed in EP 0723368. The really high number of motions and displacements that the articulated arm is due to ensure inherently implies quite a considerable construction complexity, which of course makes the whole support arrangement rather bulky. Moreover, articulated arms designed to offer a considerable variety of orientation, i.e. tilt-and-pan options necessarily require the use of a multiplicity of connection elements, such as for instance joints and hinges. Now, all these elements contribute to weakening the rigidity and the ability of the articulated arm to sustain the weight of the monitor. Owing to the fact that a large number of monitors and TV-sets currently available on the market can be noticed

to be particularly heavy, actually, due to them being for the most part given a rather large size, prior-art support arrangements turn generally out as not being capable of sustaining them, unless appropriate reinforcement actions are taken on them. However, such reinforcements give unavoidably rise to an undesired increase in both the construction complexity and the overall bulk of the support arrangement concerned.

All of the documents EP 0 047 103 A1, US 6,364,261 Bl and WO 99/44472 A1 disclose mounting elements to be fastened onto two vertical walls which are arranged orthogonal to one another, the mounting elements being adapted to carry the weight of devices fastened thereon. The mounting elements or their fastening elements, respectively, have to sustain both tractive forces and shearing forces.

Form US 2004/0251389A1 a tilter assembly is known provided for positioning an electronic device, the tilter assembly comprising a rail mounting assembly for positioning the electronic device in different heights.

It is therefore a main object of the present invention to solve the above-noted problems and do away with the drawbacks and disadvantages generally shared by prior-art support arrangements for monitors and similar pieces of equipment.

Within this general object, it is a purpose of the present invention to provide a support arrangement that is considerably less bulky, i.e. has considerably lower space requirements than currently available prior-art arrangements.

A further purpose of the present invention is to provide a support arrangement for monitors and similar pieces of equipment, which is capable of being installed and secured to a piece of furniture, such as for instance a cabinet, wherein the support arrangement itself is fully able to effectively sustain the weight of the monitor or any other similar piece of equipment, as the case may be.

Still another purpose of the present invention is to provide a support arrangement for monitors and similar pieces of equipment, which enables the weight of the monitor, or any other similar piece of equipment, as the case may be, to be distributed in an optimum manner on the walls of the cabinet, or piece of furniture, to which said arrangement is secured.

According to the present invention, all these aims and advantages are reached in a support arrangement for monitors and similar pieces of equipment incorporating the features and characteristics as defined and recited in claim 1 appended hereto.

Features and advantages of the present invention will anyway be more readily understood from the description that is given below by way of nonlimiting example with reference to the accompanying drawings, in which:

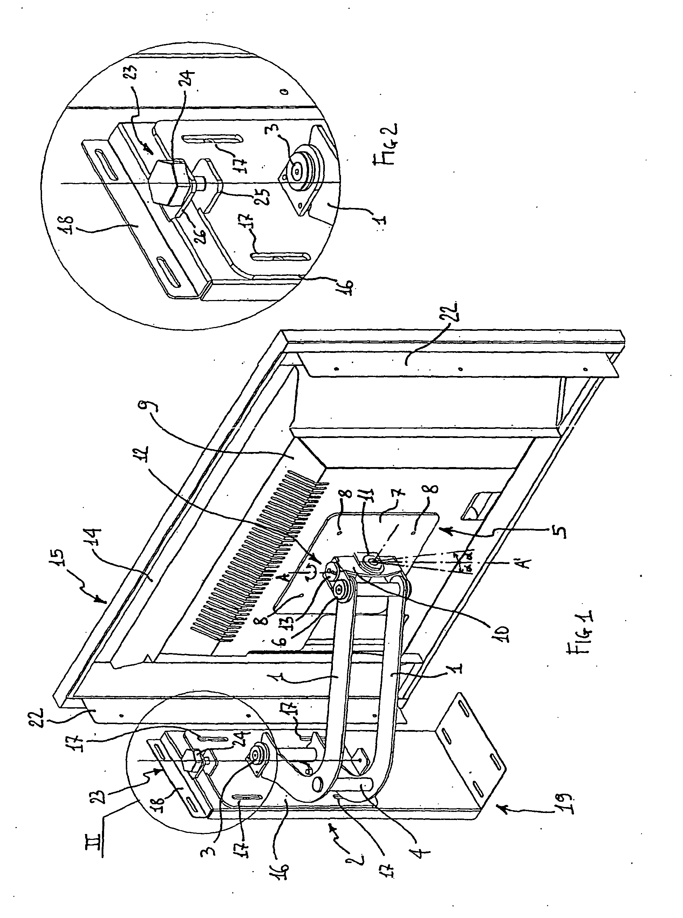

- Figure 1 is a perspective view of a monitor support arrangement according to the present invention;
- Figure 2 is an enlarged view of the detail indicated at II in Figure 1;
- Figure 3 is a plan view of the support illustrated in Figure 1, in the condition in which it is mounted on to a cabinet-like piece of furniture.

With reference to the above-listed Figures, the support arrangement according to the present invention can be noticed to comprise a pair of arms 1 that are pivotally connected to a mounting structure 2 by means of a pin 3. The arms 1 are joined with each other by means of a link stud 4 provided between the two arms. Alternatively, the two arms 1 may be replaced by a single arm that can for instance be made using a profile bar having a closed cross-sectional shape. The link stud 4 contributes to strengthening and stiffening the arms 1, so as to ensure that the same arms are capable of sustaining the weight of a monitor, or any other similar piece of equipment, without yielding to it or suffering any deformation. Advantageously, the arms 1 are shaped into following a curved contour, so as to limit the space taken up by the support arrangement when the latter is both at rest and being displaced, i.e. moving.

Fastening means 5, adapted to receive a monitor 9, are pivotally associated to the arms 1 by means of a pin 6. These fastening means 5 include a plate 7 provided with holes 8, in which there can be received the screws used to secure the rear portion of the monitor 9 to the plate 7. A fork member 10 is pivotally attached to the plate 7 by means of a pin 11. The pin 6 secures the fork member 10 on to the arms 1 in such manner as to enable the fastening means 5 to rotate about the longitudinal axis of the pin 6.

The fastening means 5 include adjustment means 12 for adjusting the angular position of the plate 7 relative to the fork member 10; this in turn enables the position of the monitor 9 to be properly set and adjusted so that the perimeter thereof tightly fits against the edges of a frame 14 of a cabinet 15. This is of particular, practical advantage when mounting the support arrangement.

The above-mentioned adjustment means 12 are preferably comprised of an eccentric or cam-like member 13, the rotation of which about the axis A causes the plate 7 to be rotated about the axis of the pin 11, i.e. to rotate relative to the fork member 10. Again, this rotation causes the angular position of the plate 7 to be varied by an angle α ranging from +4° to -4° relative to a reference vertical axis *A'*, wherein the anticlockwise direction is conventionally established as being the positive way or variation direction of the angle.

The mounting structure 2 comprises a first plate 16 that is slidably mounted on to a second plate 18. To this end, the first plate 16 is provided with slots 17 adapted to receive screws (not shown in the Figures) engaging the second plate 18 by fitting thereinto. This second plate 18 comprises in turn an angle piece 19 enabling the mounting structure 2 to be fastened on to two walls 20, 21 of the cabinet 15, which are arranged in a substantially orthogonal manner relative to each other. These walls 20, 21 are secured to the frame 14 by means of a pair of wings 22 provided on the same frame 14. The second plate 18 may be provided with a further angle piece in view of increasing the heaviest allowable load that the support arrangement will be capable of sustaining. The angle pieces 19 are furthermore effective in enabling the strain induced by the weight of both the monitor and the same support arrangement to be more evenly distributed over a large surface of the cabinet.

The mounting structure 2 also comprises adjustment means 23 enabling the position of the first plate 16 to be displaced, i.e. varied in a graduated manner relative to the second plate 18. These adjustment means 23 preferably include a threaded, i.e. screw coupling involving a screw 24 engaging a pair of tabs 25, 26 provided on the first and the second plate 16 and 18, respectively. Turning the screw 24 will cause the plate 16 to slidably displace relative to the plate 18 attached to the wall 20 of the cabinet. In this way, the vertical position of the monitor 9 will be able to be finely adjusted.

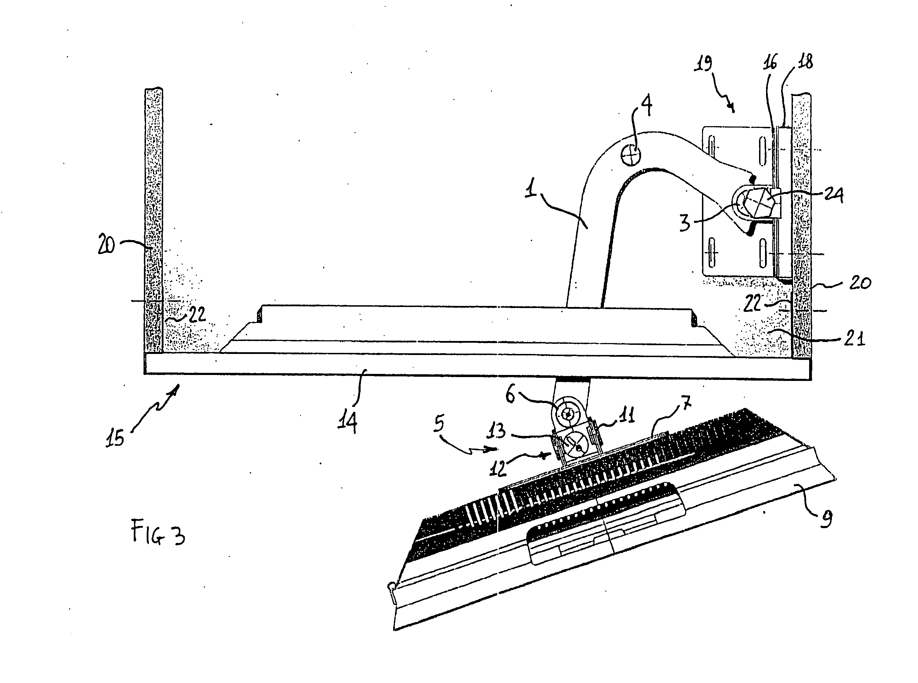

Figure 3 illustrates the inventive support arrangement in a partially extended position thereof.

Fully apparent from the above description is therefore the ability of the present invention to effectively reach the afore-noted aims and advantages through the provision of a support arrangement for monitors or similar pieces of equipment, which is compact in size and is provided with means that are effective in enabling the weight of the monitor being sustained to be evenly distributed over the walls of the cabinet, which the support arrangement itself is attached to.

It will anyhow be appreciated that the materials used for the various component parts of the above-described inventive support arrangement, as well as the shapes and the sizing thereof, may of course be each time so selected as to more appropriately fit the particular applications and requirements.

The various component parts of the above-described inventive support arrangement shall furthermore not be intended as being limited to the embodiments described and illustrated above, but may rather be subject to a number of modifications and be embodied in a number of different manners without departing from the scope of the present invention.

## Claims

1. Support arrangement for monitors or similar pieces of equipment, comprising at least an arm (1) having a curved contour and being pivotally connected to a mounting structure (2), as well as fastening means (5) adapted to receive a monitor (9), wherein said mounting structure (2) comprises a first plate (16) that is slidably mounted on a second plate (18), **characterized in that** the second plate (18) includes at least an angle-piece (19) shaped so as to allow said mounting structure (2) to be fastened onto two walls (20, 21) of a cabinet (15), which are arranged in a substantially orthogonal manner relative to each other, one of the two walls (20, 21) being a horizontally arranged baseplate (21) of the cabinet (15).

2. Support arrangement according to claim 1, wherein said mounting structure (2) comprises first adjustment means (23) for the adjustment of the position of said first plate (16) relative to said second plate (18).

3. Support arrangement according to claim 2, wherein said adjustment means (23) comprise a screw-coupling (24, 26).

4. Support arrangement according to any of the preceding claims, wherein said fastening means (5) comprise a plate (7) that is rotatably mounted to a fork member (10).

5. Support arrangement according to claim 4, wherein said fastening means (5) comprise second adjustment means (12) for the adjustment of the angular position of said plate (7) relative to said fork member (10).

6. Support arrangement according to claim 5, wherein said second adjustment means (12) comprise an eccentric or cam-like member (13).

7. Support arrangement according to claim 5 or 6, wherein said second adjustment means (12) enable the angular position to be varied by an angle ranging from +4° to -4° relative to a reference vertical axis (A).

## Patentansprüche

1. Halteanordnung für Monitore oder ähnliche Geräte, umfassend mindestens einen Arm (1), der eine gekrümmte Kontur aufweist und schwenkbar mit einer Montagestruktur (2) verbunden ist, sowie Befestigungsmittel (5), die geeignet sind, einen Monitor (9) aufzunehmen, wobei die Montagestruktur (2) eine erste Platte (16) umfasst, die verschiebbar auf einer zweiten Platte (18) montiert ist, **dadurch gekennzeichnet, dass** die zweite Platte (18) mindestens ein Winkelstück (19) umfasst, das derart geformt ist, dass die Montagestruktur (2) an zwei Wänden (20, 21) eines Schranks (15) befestigt werden kann, die auf eine im Wesentlichen rechtwinklige Weise relativ zueinander angeordnet sind, wobei eine der zwei Wände (20, 21) eine horizontal angeordnete Grundplatte (21) des Schranks (15) ist.

2. Halteanordnung nach Anspruch 1, wobei die Montagestruktur (2) erste Einstellmittel (23) zum Einstellen der Position der ersten Platte (16) relativ zur zweiten Platte (18) umfasst.

3. Halteanordnung nach Anspruch 2, wobei die Einstellmittel (23) eine Schraubverbindung (24, 26) umfassen.

4. Halteanordnung nach einem der vorhergehenden Ansprüche, wobei die Befestigungsmittel (5) eine Platte (7) umfassen, die drehbar an einem Gabelelement (10) montiert ist.

5. Halteanordnung nach Anspruch 4, wobei die Befestigungsmittel (5) zweite Einstellmittel (12) zur Einstellung der Winkelposition der Platte (7) relativ zum Gabelelement (10) umfassen.

6. Halteanordnung nach Anspruch 5, wobei die zweiten Einstellmittel (12) ein exzentrisches oder nockenartiges Element (13) umfassen.

7. Halteanordnung nach Anspruch 5 oder 6, wobei es die zweiten Einstellmittel (12) ermöglichen, die Winkelposition um einen Winkel von +4° bis -4° relativ zu einer vertikalen Referenzachse (A') zu ändern.

## Revendications

1. Système de support pour moniteurs ou équipements similaires, comportant au moins un bras (1) présentant un contour incurvé et étant relié, de manière à pouvoir pivoter, à une structure de fixation (2) ainsi que des moyens d'attache (5) conçus pour recevoir un moniteur (9), dans lequel ladite structure de fixation (2) comprend une première plaque (16) qui est fixée de manière coulissante sur une seconde plaque (18), **caractérisé en ce que** la seconde plaque (18) comprend au moins une pièce angulaire (19) réalisée de manière à permettre à ladite structure de fixation (2) d'être attachée sur deux parois (20, 21) d'un boîtier (15) qui sont agencées d'une manière sensiblement orthogonale l'une par rapport à l'autre, l'une des deux parois (20, 21) étant une plaque de base (21) du boîtier (15), disposée à l'horizontale.

2. Système de support selon la revendication 1, dans lequel ladite structure de fixation (2) comprend des premiers moyens d'ajustage (23) destinés à ajuster la position de ladite première plaque (16) par rapport à ladite seconde plaque (18).

3. Système de support selon la revendication 2, dans lequel lesdits moyens d'ajustage (23) comprennent une liaison vissée (24, 26).

4. Système de support selon l'une quelconque des revendications précédentes, dans lequel lesdits moyens d'attache (5) comprennent une plaque (7) qui est fixée, de manière à pouvoir tourner, à un élément à mode de fourche (10).

5. Système de support selon la revendication 4, dans lequel lesdits moyens d'attache (5) comprennent des seconds moyens d'ajustage (12) destinés à ajuster la position angulaire de ladite plaque (7) par rapport au dit élément à mode de fourche (10).

6. Système de support selon la revendication 5, dans lequel lesdits seconds moyens d'ajustage (12) comprennent un élément excentrique ou à mode de came (13).

7. Système de support selon la revendication 5 ou 6, dans lequel lesdits seconds moyens d'ajustage (12) permettent de varier la position angulaire d'un angle compris entre +4° et -4° par rapport à un axe vertical de référence (*A*').
